# EUROPEAN PATENT SPECIFICATION

(11) **EP 3 305 468 B1**
(45) Date of publication and mention of the grant of the patent: **31.07.2024**
(21) Application number: 17001610.9
(22) Date of filing: 28.09.2017
(51) Int. Cl.: B24B 29/00, B23C 5/10, B24B 55/06, B24D 13/10, B24B 53/007, B24B 53/12, B24B 23/02

(54) **SWARF REMOVING DEVICE FOR A DIAMOND TOOL**
VORRICHTUNG ZUR ENTFERNUNG VON SPÄNEN FÜR EIN DIAMANTWERKZEUG
DISPOSITIF D'ÉLIMINATION DES COPEAUX POUR UN OUTIL DIAMANTÉ

(30) Priority: 06.10.2016 KR 20160129101
(43) Date of publication of application: 11.04.2018
(73) Proprietor: Shinhan Diamond Ind. Co., Ltd., Incheon 21635 (KR)
(72) Inventor: Park, Young Chan, Incheon 21936 (KR); Kim, Sung Gyu, Incheon 22002 (KR); Kim, Shin kyung, Seoul 06009 (KR)
(74) Representative: Bosch Jehle Patentanwaltsgesellschaft mbH

(56) References cited:
- EP-A1- 1 875 831
- WO-A1-2007/081984
- CN-U- 203 712 398
- CN-Y- 201 127 395
- DE-A1- 102013 210 158
- DE-U1- 20 216 054
- JP-A- 2003 116 637
- US-A- 394 902
- US-A1- 2010 095 466

## Description

### BACKGROUND

### FIELD

The present invention relates to an attachment removing device for a diamond tool used in a machining process such as cutting, grinding, polishing, drilling, or the like, and more particularly, to a device for removing metallic material that is melted and attached to a cutting wheel such as a diamond tip cutting wheel when the cutting wheel cuts iron or a workpiece including iron.

### DISCUSSION OF THE BACKGROUND

Generally, a diamond tip cutting wheel includes a disk formed of a metal such as steel and a diamond portion provided in a circumferential portion of the disk and cutting or polishing a workpiece, and is used to cut and polish a target to be machined having high hardness and strength, such as a stone or a metal.

The diamond portion may also be connected to a shank of the disk by, for example, brazing. That is, after a liquidphase paste in which a metal binding material and a binder are mixed with each other is applied to the shank, diamond abrasive grains, for example, particles of diamond or CBNC (cubic boron nitride), or particles of alumina (Al₂O₃) or silicon carbide (SiC) are dispersed to be bonded to the shank at a high temperature.

In the diamond tip cutting wheel manufactured by the brazing as described above, a strong chemical bond is formed on an interface between the abrasive grains and the metal binding material, such that a phenomenon in which the abrasive grains are separated during using the diamond tip cutting wheel rarely occurs, and maximization of exposure of the abrasive grains and precise distance adjustment between the abrasive grains are possible.

However, when the diamond tip cutting wheel manufactured by the brazing as described above cuts iron or a workpiece including iron, a portion of the iron under cutting melts and is attached to the diamond abrasive grains of the diamond tip cutting wheel, resulting in deterioration of cutting capability of the diamond tip cutting wheel.

From CN 201 127 395 Y there is known an attachment removing device for removing an attachment, comprising:a cylindrical member; a plurality of bristles each having one end connected to the cylindrical member; and a jig portion including leg members rotatably connected to both ends of the cylindrical member by a shaft and a body from which the leg members are extended, wherein rotation around the shaft is configured to be subjected to predetermined resistance.

### BRIEF SUMMARY OF THE INVENTION

An object of the present invention is to provide an attachment removing device for a diamond tool for removing an attachment attached to the diamond tool, as defined in claim 1.

According to an exemplary embodiment of the present invention, there is provided an attachment removing device for a diamond tool for removing an attachment attached to the diamond tool including: a cylindrical member; and a plurality of bristles each having one end connected to the cylindrical member.

The attachment removing device for a diamond tool further includes a jig portion including leg members connected to both ends of the cylindrical member by a shaft and a body from which the leg members are extended.

The attachment removing device for a diamond tool may further include a knob connected to the jig portion.

The attachment removing device for a diamond tool may further include a fixing portion connected to the knob.

The attachment removing device for a diamond tool may further include a bendable connecting portion disposed between the knob and the fixing portion.

The diamond tool is a diamond tip cutting wheel.

### BRIEF DESCRIPTION OF THE DRAWINGS

FIG. 1 is a partial plan view of a diamond tip cutting wheel for which an attachment removing device for a diamond tool according to an exemplary embodiment of the present invention may be used.
FIG. 2 is a partial cross-sectional view of the diamond tip cutting wheel taken along line II-II of FIG. 1.
FIG. 3 is a perspective view of the attachment removing device for a diamond tool according to an exemplary embodiment of the present invention.
FIG. 4 is a cross-sectional view of a brush portion taken along line IV-IV of FIG. 3.
FIG. 5 is a perspective view illustrating an exemplary use of the attachment removing device for a diamond tool according to an exemplary embodiment of the present invention.

### DETAILED DESCRIPTION OF THE ILLUSTRATED EMBODIMENTS

Hereinafter, an exemplary embodiment of the present invention will be described with reference to the drawings, and an advantage and a feature of the present invention and a method for accomplishing them may be clearly understood through such a description.

In addition, the following description relates to an exemplary embodiment of the present invention, but it will be obvious to those skilled in the art that the present invention is not limited to an exemplary embodiment to be described below, but may be implemented in several forms different from a form mentioned in the following description without departing from the scope of the present invention, as defined by the claims.

An exemplary embodiment to be described below is to make a disclosure of the present invention complete, and is provided to allow those skilled in the art to obviously recognize the scope of the present invention, but the scope of the present invention is defined by only claims.

Meanwhile, in any exemplary embodiment to be described below, the well-known components, the well-known operations, and the well-known technologies will not be described in detail in order for the present invention not to be obscurely interpreted.

In addition, it is to be noted that throughout the present specification, the same reference numerals denote the same components, and terms used (mentioned) in the present specification are provided for description of an exemplary embodiment rather than limitation of the present invention.

In the present specification, a singular form includes a plural form unless explicitly described to the contrary, and components and operations mentioned by terms "include(or comprise, or have, or be provided with)" do not exclude the existence or addition of one or more other components and operations.

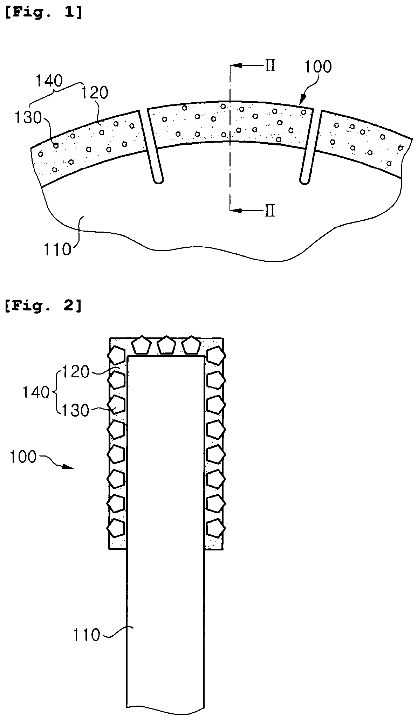

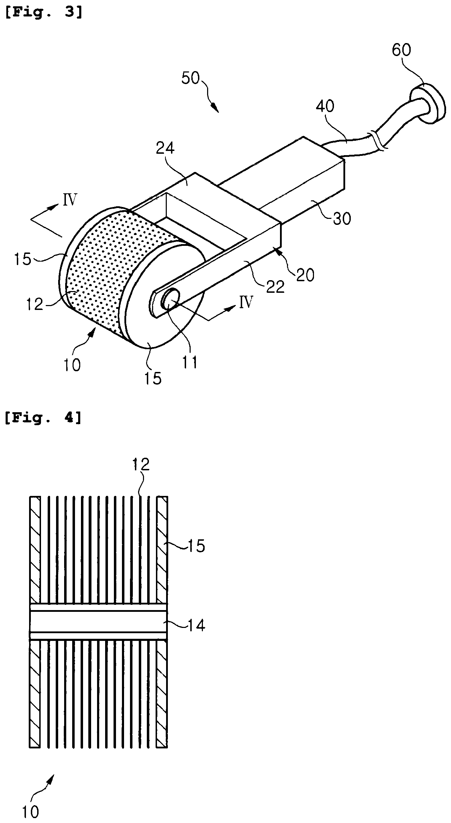

First, referring to FIGS. 1 and 2, a partial plan view of a diamond tip cutting wheel in which an attachment removing device 50 (see FIG. 3) for a diamond tool according to an exemplary embodiment of the present invention may be used and a cross-sectional view taken along line II-II of FIG. 1 are illustrated, respectively.

The diamond tip cutting wheel 100 includes a shank 110 provided in a circumferential portion of a disk formed of a metal such as steel and a tip 140 coupled to an outer circumference of the shank 110. In addition, the tip 140 includes a metal binding material 120 applied onto the shank 110 and diamond abrasive grains 130 disposed on the metal binding material 120. Although the diamond tip cutting wheel 100 manufactured by brazing is described by way of example in the present exemplary embodiment, it is obvious to those skilled in the art that the present invention is not limited thereto, but may also be applied to a cutting wheel, a diamond tip attaching type cutting wheel, and the like, manufactured by electroplating or sintering.

When a workpiece is polished or cut using the diamond tip cutting wheel 100 configured as described above, a polishing or cutting process may be performed while a portion of the diamond abrasive grain 130 digs into the workpiece, since the portion of the diamond abrasive grain 130 is disposed on the metal binding material 120 so as to further protrude upwardly than a surface of the metal binding material 120. However, for example, during cutting a metallic workpiece such as iron, swarf or chips generated from the workpiece may be in a state in which they are melted by high frictional heat. In this case, the melted swarf or chips may be attached to the diamond abrasive grains 130 of the diamond tip cutting wheel 100. As an amount of such attachments becomes greater, portions of the diamond abrasive grains 130 exposed on the metal binding material 120 become less to deteriorate polishing and cutting capabilities of the diamond tip cutting wheel 100.

Referring to FIG. 3, a perspective view of the attachment removing device for a diamond tool according to an exemplary embodiment of the present invention is illustrated.

The attachment removing device 50 for a diamond tool according to an exemplary embodiment of the present invention includes a brush portion 10. The brush portion 10 includes a plurality of bristles each having one end portion fixed to, for example, a cylindrical member 14 (see FIG. 4) and extended externally from the cylindrical member 14. The bristles 12 may be formed of a metal wire having a predetermined thickness, rigidity, and the like, and the other end portions of the bristles 12 may be generally disposed to form an approximately cylindrical shape, a cylindrical shape in which a concave portion having a predetermined width and depth is formed at a central portion, or the like.

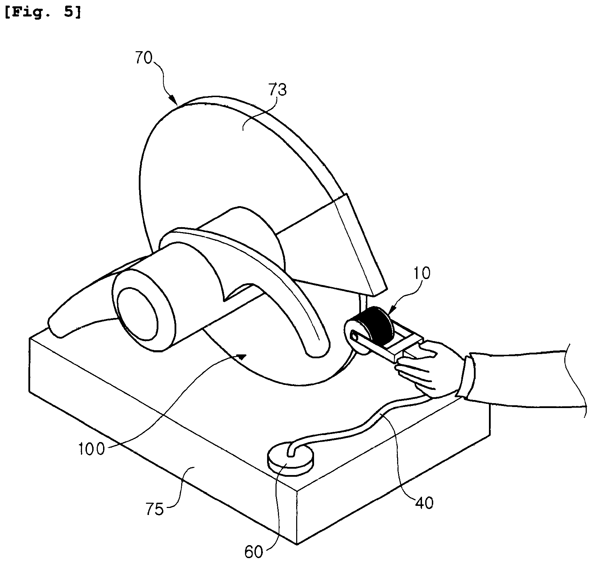

According to the configuration as described above, as illustrated in FIG. 5, after the diamond tip cutting wheel 100 is mounted in a cutting device 70 and performs a cutting process, the tip 140 of the diamond tip cutting wheel 100 is closely pressed against or inserted into the bristles 12 of the brush portion 10, such that the attachments attached to the diamond abrasive grains 130 can be removed by the bristles 12. Therefore, the diamond abrasive grains 130 of the diamond tip cutting wheel 100 can be exposed well again as in an original state, such that initial cutting and polishing capabilities of the diamond tip cutting wheel 100 can be recovered.

Again referring to FIG. 3, the brush portion 10 of the attachment removing device 50 for a diamond tool according to an exemplary embodiment of the present invention includes disk members 15 disposed at both sides with the bristles 12 interposed therebetween to prevent the bristles 12 from being spread to both sides and improve attachment removing efficiency.

In addition, the attachment removing device 50 for a diamond tool according to an exemplary embodiment of the present invention further includes a jig portion 20 supporting the brush portion 10. The jig portion 20 may be rotatably connected to both end portions of the cylindrical member 14 of the brush portion 10 by a shaft 11 penetrating through the cylindrical member 14 of the brush portion 10. That is, the shaft 11 is connected between a pair of leg members 22 of the jig portion 20. The pair of leg members 22 are extended from a body 24.

Meanwhile, rotation around the shaft 11 of the brush portion 10 is configured to be subjected to predetermined resistance. That is, the brush portion 10 may be configured to provide the rotating tip 140 with the predetermined resistance when the brush portion 10 is closely pressed against the tip 140 of the diamond tip cutting wheel 100. For example, the shaft 11 includes a nut and a bolt, and the bolt and the nut are tightened so strongly that the leg members 22 are closely contacted with the disk members 15 to generate large resistance, i.e., friction therebetween, or vice versa.

The body 24 may be provided with a knob 30, for example, at an opposite side to the brush portion 10. In this case, a user of the attachment removing device 50 for a diamond tool may hold the knob 30 and press the brush portion 10 closely against the tip 140 of the diamond tip cutting wheel 100, as illustrated in FIG. 5.

The attachment removing device 50 for a diamond tool according to an exemplary embodiment of the present invention may further include a fixing portion 60. The fixing portion 60 may be formed of, for example, a permanent magnet, or the like. In the case in which the fixing portion 60 is configured as described above, the fixing portion 60 may be attached to, for example, a support 75 of the cutting device 70 formed of a metal, as illustrated in FIG. 5, such that the attachment removing device 50 for a diamond tool may be detachably and fixedly disposed at a place adjacent to the diamond tip cutting wheel 100 for which the attachment removing device 50 for a diamond tool is used.

In addition, the fixing portion 60 may be directly connected to the knob 30 or may be connected to the knob 30 by a connecting portion 40 that may be freely curved or bent and is formed of, for example, a bendable or flexible member, as illustrated in FIG. 3. In the case in which the fixing portion 60 is configured as described above, as illustrated in FIG. 5, the brush portion 10 may be closely pressed against the tip 140 of the diamond tip cutting wheel 100 even in a state in which the fixing portion 60 is fixed to the support 75 of the cutting device 70.

As described above, according to the attachment removing device 50 for a diamond tool according to an exemplary embodiment of the present invention, after the diamond tip cutting wheel 100 is mounted in the cutting device 70 and performs the cutting or polishing process, the brush portion 10 including the bristles 12 may be closely pressed against the tip 140 of the diamond tip cutting wheel 100 to remove the attachments attached to the diamond abrasive grains 130 of the diamond tip cutting wheel 100 in the cutting or polishing process, thereby preventing the cutting or polishing capability of the diamond tip cutting wheel 100 from being deteriorated due to the attachments.

In addition, the jig portion 20 is provided with the knob 30, such that a user may easily maintain the brush portion 10 at a predetermined position.

In addition, the fixing portion 60 formed of, for example, the permanent magnet is provided in the attachment removing device 50 for a diamond tool, such that the attachment removing device 50 for a diamond tool may be kept and disposed at a predetermined place, and inconvenience that the attachment removing device 50 for a diamond tool should be found whenever it is used may thus be eliminated.

## Claims

1. An attachment removing device (50) for a diamond tool for removing an attachment attached to the diamond tool, comprising:
a cylindrical member (14);
a plurality of bristles (12) each having one end connected to the cylindrical member;
a pair of disk members (15) each connected to both ends of the cylindrical member; and
a jig portion (20) including leg members (22) rotatably connected to both ends of the cylindrical member by a shaft (11) and a body (24) from which the leg members are extended,
wherein rotation around the shaft (11) is configured to be subjected to predetermined resistance, and
the pair of disk members (15) are disposed with the bristles (12) interposed between the disk members to prevent the bristles (12) from being spread to both sides.

2. The attachment removing device (50) for a diamond tool of claim 1, further comprising a knob (30) connected to the jig portion (20).

3. The attachment removing device (50) for a diamond tool of claim 2, further comprising a fixing portion (60) connected to the knob (30).

4. The attachment removing device (50) for a diamond tool of claim 3, further comprising a bendable connecting portion (40) disposed between the knob (30) and the fixing portion (60).

## Patentansprüche

1. Ansatzentfernungswerkzeug (50) für ein Diamantwerkzeug zum Entfernen von an dem Diamantwerkzeug anhaftendem Ansatz, umfassend:
ein zylindrisches Glied (14);
mehrere Borsten (12), von denen jeweils ein Ende mit dem zylindrischen Glied verbunden ist;
ein Paar Scheibenglieder (15), die jeweils mit beiden Enden des zylindrischen Glieds verbunden sind; und
einen Einspannteil (20), das Schenkelglieder (22), die durch eine Welle (11) drehbar mit beiden Enden des zylindrischen Glieds verbunden sind, und einen Körper (24), von dem sich die Schenkelglieder erstrecken, aufweist,
wobei eine Drehung um die Welle (11) dazu ausgelegt ist, mit einem vorbestimmten Widerstand beaufschlagt zu werden, und
das Paar Scheibenglieder (15) mit den zwischen den Scheibengliedern angeordneten Borsten (12) angeordnet sind, um zu verhindern, dass die Borsten (12) nach beiden Seiten gespreizt werden.

2. Ansatzentfernungswerkzeug (50) für ein Diamantwerkzeug nach Anspruch 1, ferner umfassend einen Griff (30), der mit dem Einspannteil (20) verbunden ist.

3. Ansatzentfernungswerkzeug (50) für ein Diamantwerkzeug nach Anspruch 2, ferner umfassend einen Befestigungsteil (60), der mit dem Griff (30) verbunden ist.

4. Ansatzentfernungswerkzeug (50) für ein Diamantwerkzeug nach Anspruch 3, ferner umfassend einen biegbaren Verbindungsteil (40), der zwischen dem Griff (30) und dem Befestigungsteil (60) angeordnet ist.

## Revendications

1. Dispositif de retrait de matière accrochée (50) pour un outil diamanté destiné à retirer une matière accrochée à l'outil diamanté, comprenant :
un élément cylindrique (14) ;
une pluralité de poils (12) ayant chacun une extrémité reliée à l'élément cylindrique ;
une paire d'éléments disques (15), chacun relié aux deux extrémités de l'élément cylindrique ; et
une partie gabarit (20) comprenant des éléments pattes (22) reliés de manière rotative aux deux extrémités de l'élément cylindrique par un arbre (11) et un corps (24) à partir duquel s'étendent les éléments pattes,
dans lequel la rotation autour de l'arbre (11) est conçue pour être soumise à une résistance prédéterminée, et
la paire d'éléments disques (15) est disposée avec les poils (12) interposés entre les éléments disques pour empêcher les poils (12) de s'étaler des deux côtés.

2. Dispositif de retrait de matière accrochée (50) pour un outil diamanté selon la revendication 1, comprenant en outre un bouton (30) relié à la partie gabarit (20).

3. Dispositif de retrait de matière accrochée (50) pour un outil diamanté selon la revendication 2, comprenant en outre une partie de fixation (60) reliée au bouton (30).

4. Dispositif de retrait de matière accrochée (50) pour un outil diamanté selon la revendication 3, comprenant en outre une partie de connexion pliable (40) disposée entre le bouton (30) et la partie de fixation (60).
